# EUROPÄISCHE PATENTANMELDUNG

(11) **EP 4 099 460 A1**
(43) Veröffentlichungstag der Anmeldung: **07.12.2022**
(21) Anmeldenummer: 22176236.2
(22) Anmeldetag: 30.05.2022
(51) Int. Cl.: H01M 10/052, H01M 10/058, H01M 50/636

(54) **VERFAHREN ZUR HERSTELLUNG EINER BATTERIEZELLE**

(30) Priorität: 31.05.2021 DE 102021114006
(71) Anmelder: Volkswagen Aktiengesellschaft, 38440 Wolfsburg (DE)
(72) Erfinder: Breuer, Alexander, 29227 Celle (DE); Batres Hermosillo, Talia, 38112 Braunschweig (DE); Böhm, Dennis, 38302 Wolfenbüttel (DE)
(74) Vertreter: karo IP

(57) **Zusammenfassung**

Verfahren zur Herstellung einer Batteriezelle (1), wobei die Batteriezelle (1) ein Gehäuse (2) mit einem ersten Volumen (3) und in dem ersten Volumen (3) eine Vielzahl von aufeinander gestapelten Elektroden und einen Elektrolyten aufweist; wobei der Elektrolyt über eine Öffnung (6) in dem Gehäuse (2) in das erste Volumen (3) einführbar ist.

## Beschreibung

Die Erfindung betrifft ein Verfahren zur Herstellung einer Batteriezelle, insbesondere einer Lithium-lonen-Batteriezelle. Die Batteriezelle weist ein Gehäuse mit einem ersten Volumen und in dem ersten Volumen eine Vielzahl von aufeinander gestapelten und ggf. zusätzlich gewickelten (z. B. Jelly Roll) Elektroden und einen Elektrolyten auf.

Die Erfindung kommt insbesondere bei der Herstellung von Lithium-Ionen-Batterien für beispielsweise elektrifizierte Fahrzeuge zum Einsatz.

Eine Batteriezelle ist ein Stromspeicher, der z. B. in einem Kraftfahrzeug zum Speichern von elektrischer Energie eingesetzt wird. In einer Batteriezelle sind Elektrodenfolien, also Anoden und Kathoden aufeinander gestapelt angeordnet, wobei unterschiedliche Elektrodenfolien durch Separatorfolien oder ein Separatormaterial voneinander getrennt angeordnet sind. Diese Elektrodenfolien und die Separatoren werden im Folgenden als Elektroden bezeichnet. Die Elektroden sind innerhalb eines Gehäuses in einem Elektrolyt angeordnet.

Die innerhalb des Gehäuses angeordneten Elektrodenfolien werden über sogenannte Ableiter mit einem elektrischen Stromkreis außerhalb des Gehäuses verbunden. Die Ableiter erstrecken sich durch das gasdichte Gehäuse nach außen und bilden an einer Außenumfangfläche des Gehäuses einen elektrischen Anschluss. Innerhalb des Gehäuses sind die Ableiter mit der Vielzahl von Elektrodenfolien gleicher Art, also Anoden oder Kathoden, elektrisch leitend verbunden. Dabei wird ein Ableiter insbesondere mit einer Vielzahl von Elektrodenfolien verbunden.

In einer aktuellen Bauform einer Batteriezelle ist ein Stapel von Elektroden, die nur gestapelt oder zusätzlich gewickelt sind, innerhalb eines formfesten Gehäuses angeordnet. Ein solches formfestes, also insbesondere nur plastisch verformbares Gehäuse, wird auch als prismatische Batteriezelle bezeichnet. Das formfeste Gehäuse weist insbesondere einen Deckel auf, an dem zumindest ein elektrischer Anschluss zur elektrischen Verbindung der innerhalb des Gehäuses angeordneten Elektroden mit einem außerhalb des Gehäuses angeordneten Stromkreis, sowie eine (verschließbare) Öffnung zur Befüllung mit dem Elektrolyten vorgesehen ist.

Zur Herstellung einer Batteriezelle wird das Gehäuse bereitgestellt, die Elektroden darin angeordnet und das Gehäuse mit einem Elektrolyt befüllt. Nach dem Einfüllen des Elektrolyts und der Entgasung des Volumen des Gehäuses wird das Einfüllloch für den Elektrolyten verschlossen. Derzeit wird dieses Verschließen mit bekanntem Laser- oder Ultraschallschweißen durchgeführt. Die Durchführung dieses Prozesses mit optimaler Qualität ist aber derzeit noch eine offene Herausforderung. Gerade beim konventionellen Laserschweißen von Aluminium bzw. Aluminiumlegierungen können regelmäßig nur poröse Schweißnähte erreicht werden. Dabei entstehen Funken und Materialspritzer während des Schweißprozesses. Beim alternativ durchgeführten Ultraschallschweißen entstehen metallische Partikel. Die Spritzer von Aluminium oder anderen metallischen Materialien während des Schweißprozesses oder die während des Ultraschallschweißens entstehenden Partikel verursachen nicht nur Verschmutzungen auf dem Gehäuse, sondern können auch zu einer Verunreinigung des Elektrolyten führen, was eine schlechtere Leistung der Batteriezelle zur Folge hat. Aus diesen Gründen ist es wünschenswert, das Elektrolyt-Einfüllloch so abzudichten, dass sowohl der Elektrolyt als auch die innerhalb des Volumens angeordneten Komponenten der Batteriezelle geschützt werden.

Es besteht also ein Bedürfnis, ein großserientaugliches Verfahren zur Erzeugung derartiger Schweißverbindungen bereitzustellen, insbesondere ein Verfahren, das mit derzeit verfügbaren Laservorrichtungen durchgeführt werden kann.

Aus der US 2012/0070722 A1 ist ein Verfahren zur Herstellung einer Batteriezelle bekannt. Dabei wird eine Einfüllöffnung der Batteriezelle für einen Elektrolyten durch ein Laserschweißverfahren verschlossen. Die Batteriezelle wird dazu in einer Vakuumkammer angeordnet, so dass das Gehäuse vor dem Verschließen der Einfüllöffnung drucklos vorliegt.

Aus der US 2012/0040230 A1 ist ein Verfahren zur Herstellung einer Batteriezelle bekannt, wobei vor dem Verschließen einer Anodenkammer der Batteriezelle die darin enthaltenen Gase abgesaugt werden.

Hiervon ausgehend ist es eine Aufgabe der Erfindung, die im Zusammenhang mit dem Stand der Technik geschilderten Probleme zumindest teilweise zu lösen. Insbesondere soll ein Verfahren zur Herstellung einer Batteriezelle angegeben werden, bei dem eine für das Einfüllen eines Elektrolyten vorgesehene Öffnung im Gehäuse sicher und zuverlässig verschließbar ist und mit dem eine nicht poröse geschweißte Oberfläche erzielt wird.

Diese Aufgaben werden gelöst durch die Merkmale des unabhängigen Patentanspruchs 1. Weitere vorteilhafte Ausgestaltungen der hier vorgeschlagenen Lösung sind in den abhängigen Patentansprüchen angegeben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Es wird ein Verfahren zur Herstellung einer Batteriezelle vorgeschlagen. Die Batteriezelle weist ein Gehäuse mit einem ersten Volumen und in dem ersten Volumen eine Vielzahl von aufeinander gestapelten und ggf. zusätzlich gewickelten Elektroden und einen Elektrolyten auf. Der Elektrolyt ist über eine Öffnung in dem Gehäuse in das erste Volumen einführbar. Das Verfahren umfasst zumindest die folgenden Schritte:
a) Bereitstellen der Batteriezelle mit Gehäuse und darin angeordneten Elektroden und dem Elektrolyten sowie der unverschlossenen Öffnung;
b) Entgasen des ersten Volumens über die Öffnung und Verschließen der Öffnung mit einem Schließelement, wobei das Schließelement und die Öffnung eine nicht-stoffschlüssige Verbindung ausbilden;
c) Anordnen einer Kammer an dem Gehäuse, so dass die Öffnung und das Schließelement innerhalb der Kammer und zumindest ein Teil des Gehäuses außerhalb der Kammer angeordnet sind;
d) Erzeugen eines Unterdrucks in der Kammer;
e) Bereitstellen einer Laserschweißvorrichtung und stoffschlüssiges Verbinden des Schließelements mit dem Gehäuse durch einen Laserstrahl, so dass die Öffnung durch die so erzeugte stoffschlüssige Verbindung gasdicht verschlossen ist.

Die obige (nicht abschließende) Einteilung der Verfahrensschritte in a) bis e) soll vorrangig nur zur Unterscheidung dienen und keine Reihenfolge und/oder Abhängigkeit erzwingen. Auch die Häufigkeit der Verfahrensschritte z. B. kann variieren. Ebenso ist möglich, dass Verfahrensschritte einander zumindest teilweise zeitlich überlagern. Ganz besonders bevorzugt finden die Verfahrensschritte c), d) und e) zumindest teilweise zeitlich parallel statt. Insbesondere wird Schritt d) unmittelbar nach dem Anordnen der Kammer an dem Gehäuse eingeleitet und auch während Schritt e) durchgeführt. Insbesondere wird also während Schritt e) der gemäß Schritt d) erzeugte Unterdruck aufrechterhalten. Insbesondere werden die Schritte a) bis e) in der angeführten Reihenfolge durchgeführt.

Das Gehäuse ist insbesondere ein formfestes (also nur ein plastisch verformbares) Gehäuse. Das Gehäuse wird auch als Hardcase bezeichnet und die Batteriezelle z. B. als eine prismatische Zelle.

Das Gehäuse kann auch als eine Pouchzelle ausgeführt sein. Eine Pouchzelle umfasst ein verformbares Gehäuse bestehend aus einer Pouchfolie und ist damit gerade nicht eine prismatische Zelle (mit einem formfesten Gehäuse). Eine Pouchfolie ist ein bekanntes verformbares Gehäuseteil, dass als Gehäuse für sogenannte Pouchzellen eingesetzt wird. Es handelt sich dabei um ein Kompositmaterial, z. B. umfassend einen Kunststoff und Aluminium.

Die Elektroden sind insbesondere in bekannter Weise gestapelt oder gestapelt und gewickelt (Jelly Roll, etc.) angeordnet und werden von einem Elektrolyten bzw. einer Elektrolytflüssigkeit beaufschlagt.

Insbesondere umfasst der Begriff Elektroden eine Vielzahl von Elektrodenfolien und Separatoren, die aufeinandergestapelt oder gestapelt und dann gemeinsam gewickelt angeordnet sind. Die Elektroden können als Einzelblattstapel, Laminierung, Z-Faltung, Jelly Roll angeordnet sein, jeweils in beliebiger Anzahl.

Die Elektroden sind insbesondere folienartig ausgeführt, weisen also eine große Seitenfläche und eine geringe Dicke auf. Auf der Seitenfläche bzw. auf jeder Seitenfläche der Elektrode ist insbesondere eine Beschichtung mit Aktivmaterial angeordnet. Die Separatoren sind jeweils zwischen den Seitenflächen der benachbart angeordneten unterschiedlichen Elektroden angeordnet. Insbesondere erstrecken sich unbeschichtete Teile der Elektroden als Ableiter aus dem Stapel Elektroden heraus.

Insbesondere sind jeweils die Anoden und die Kathoden innerhalb des Stapels von Elektroden miteinander parallelgeschaltet, so dass die Ableiter einer Mehrzahl von Anoden miteinander elektrisch leitend verbunden sind und die Ableiter einer Mehrzahl von Kathoden miteinander elektrisch leitend verbunden sind.

Die Batteriezelle ist insbesondere eine lithiumhaltige Batteriezelle, insbesondere eine Sekundärzelle, also eine wiederaufladbare Batteriezelle.

Vorliegend wird insbesondere vorgeschlagen, die Öffnung zunächst durch ein Schließelement zu verschließen, so dass bei dem nachfolgend durchgeführten Schweißprozess die Öffnung bereits verschlossen ist. Eine Verunreinigung des Elektrolyten kann damit verhindert werden. Weiter wird vorgeschlagen, das Laserschweißen unter Vakuum bzw. Unterdruck (also unter Luftabschluss) durchzuführen. Damit kann eine Prozessstabilität des Laserschweißens erhöht und die Qualität der Schweißnaht entscheidend verbessert werden. Um eine Großserientauglichkeit zu realisieren, wird vorgeschlagen, den Unterdruck in einer möglichst kleinen Kammer zu erzeugen, so dass die Atmosphäre zum Schweißen möglichst schnell und mit geringstmöglichem Einsatz von Energie und Hilfsstoffen hergestellt werden kann.

Gemäß Schritt a) erfolgt ein Bereitstellen der grundsätzlich bekannten Batteriezelle mit Gehäuse und darin angeordneten Elektroden und dem Elektrolyten sowie der unverschlossenen Öffnung. Die Öffnung ist insbesondere in einem formstabilen Teil des Gehäuses angeordnet.

Gemäß Schritt b) erfolgt ein Entgasen des ersten Volumens über die Öffnung in bekannter Weise und ein Verschließen der Öffnung mit einem Schließelement, wobei das Schließelement und die Öffnung eine nicht-stoffschlüssige, also eine kraftschlüssige und/oder formschlüssige, Verbindung ausbilden.

Formschlüssige Verbindungen entstehen durch das Ineinandergreifen von mindestens zwei Verbindungspartnern. Dadurch können sich die Verbindungspartner auch ohne oder bei unterbrochener Kraftübertragung nicht lösen. Anders ausgedrückt ist bei einer formschlüssigen Verbindung der eine Verbindungspartner dem anderen im Weg. Z. B. ist das Schließelement als ein Niet ausgeführt, der unverformt in die Öffnung eingeführt und dann zumindest innerhalb des Volumens verformt wird, so dass das Schließelement unverlierbar in der Öffnung angeordnet ist. Alternativ kann das Schließelement mit einem Gewinde und die Öffnung mit einem Gegengewinde ausgeführt sein, so dass zumindest gegenüber einer Achse ein Formschluss zwischen Gewinde und Gehäuse und gegenüber einer Umfangsrichtung ein Kraftschluss realisiert ist.

Kraftschlüssige Verbindungen setzen eine Normal-Kraft auf die miteinander zu verbindenden Flächen voraus. Ihre gegenseitige Verschiebung ist verhindert, solange die durch die Haftreibung bewirkte Gegen-Kraft nicht überschritten wird. Z. B. ist das Schließelement über eine Presspassung oder ein Gewinde in der Öffnung angeordnet.

Stoffschlüssige Verbindungen werden alle Verbindungen genannt, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen. Wie nachfolgend beschrieben, wird das Schließelement über ein Laserprozess stoffschlüssig mit dem Gehäuse verbunden.

Das Schließelement kann einteilig oder mehrteilig ausgeführt sein. Das Schließelement oder Teile davon können während der Anordnung in der Öffnung verformt werden, so dass die geforderte kraft- und/ oder formschlüssige Verbindung realisiert wird.

Das Schließelement und das Gehäuse bilden insbesondere eine Kontaktfläche miteinander aus, die durch einen nachfolgenden Laserprozess zur Ausbildung einer stoffschlüssigen Verbindung geeignet ausgeführt ist.

Das Material des Schließelements entspricht zumindest im Bereich der Kontaktfläche bzw. in dem Bereich der späteren stoffschlüssigen Verbindung im Wesentlichen dem Material des Gehäuses in diesem Bereich.

Gemäß Schritt c) erfolgt ein Anordnen einer Kammer an dem Gehäuse, so dass die Öffnung und das Schließelement innerhalb der Kammer und zumindest ein Teil des Gehäuses außerhalb der Kammer angeordnet sind. Die Kammer hat die Funktion das Schließelement und einen Teil des Gehäuses gegenüber einer Umgebung der Batteriezelle und der Kammer abzudichten, so dass innerhalb der Kammer eine spezielle Atmosphäre einstellbar ist, bevorzugt ein Vakuum oder Teilvakuum, dass über eine an die Kammer angeschlossene Vakuumeinrichtung realisierbar ist.

Die Kammer weist insbesondere eine offene Seitenfläche auf, die auf dem Gehäuse angeordnet wird. Die Kammer umgibt damit eine Fläche des Gehäuses, die die Öffnung bzw. das Schließelement, eine Wärmeinflusszone der in Schritt e) erzeugten Schweißnaht und eine, die Schweißnaht und die Wärmeeinflusszone umgebende Zusatzzone umfasst. Die Zusatzzone verhindert, dass die Kammer durch eine Kontaktierung der Wärmeeinflusszone beschädigt werden kann.

Die Fixierung zwischen der Kammer und der Oberfläche des Gehäuses kann durch eine spezielle Klemmvorrichtung oder durch ein Ansaugsystem, z. B. durch eine an die Kammer angeschlossene Vakuumeinrichtung, erfolgen.

Die Kammer kontaktiert das Gehäuse insbesondere über eine Auflagefläche. Das Material dieser Auflagefläche kann ein Gummi oder ein weiches Metall sein, um die Beschädigung des Gehäuses durch das Anordnen der Kammer aufgrund der Unterdruckbedingungen in der Kammer zu vermeiden.

Schritt d) umfasst das Erzeugen eines Unterdrucks, also eines Teilvakuums oder eines Vakuums, in der Kammer. Dazu ist insbesondere eine Vakuumeinrichtung an die Kammer angeschlossen, über die Luft aus der Kammer abgesaugt werden kann.

Schritt e) umfasst das Bereitstellen einer Laserschweißvorrichtung und das stoffschlüssiges Verbinden des Schließelements mit dem Gehäuse durch einen Laserstrahl, so dass die Öffnung durch die so erzeugte stoffschlüssige Verbindung gasdicht verschlossen wird bzw. ist.

Infolge des Vakuums bzw. Teilvakuums innerhalb der Kammer kann eine qualitativ hochwertige Schweißnaht realisiert werden.

Die Laserschweißvorrichtung kann insbesondere eine bekannte Laserquelle, z. B. einen Infrarotlaser, umfassen.

Insbesondere wird der Laserstrahl über eine lichtdurchlässige Wandung der Kammer in die Kammer eingekoppelt. Insbesondere ist die lichtdurchlässige Wandung der Kammer gegenüber von der offenen Seitenfläche der Kammer angeordnet.

Alternativ kann der Laserstrahl auch über einen Lichtleiter in die Kammer eingeleitet werden und erst innerhalb der Kammer aus dem Lichtleiter austreten.

Die Kammer ist während Schritt e) insbesondere unbeweglich auf dem bzw. gegenüber dem Gehäuse angeordnet. Insbesondere wird der Laserstrahl gegenüber dem Gehäuse und gegenüber einer Umgebung zur Erzeugung der Schweißnaht bewegt. Alternativ oder zusätzlich wird das Gehäuse mit der Kammer gegenüber dem Laserstrahl und der Umgebung bewegt.

Insbesondere weist die Kammer eine Auflagefläche zur Kontaktierung des Gehäuses auf, wobei die Auflagefläche zur gasdichten Abdichtung der Kammer gegenüber einer Umgebung geeignet ausgeführt ist.

Insbesondere weist die Kammer ein zweites Volumen auf, dass geringer ist als das erste Volumen. Das zweite Volumen der Kammer ist also in jedem Fall kleiner als das von dem Gehäuse eingeschlossene erste Volumen. Das Gehäuse kann also nicht innerhalb der Kammer angeordnet werden.

Insbesondere beträgt das zweite Volumen höchstens 5 Prozent, bevorzugt höchstens 2 Prozent, besonders bevorzugt höchstens 1 Prozent, des ersten Volumens. Das zweite Volumen ist also möglichst klein ausgeführt, so dass für jeden Schweißprozess nur in einem geringem Volumen ein Unterdruck erzeugt werden muss. Damit ist das Verfahren kostengünstig durchführbar.

Insbesondere umfasst das Schließelement ein Dichtmaterial, durch das die Öffnung vor Schritt c) zumindest flüssigkeitsdicht verschlossen ist. Das Dichtmaterial umfasst z. B. ein verformbares Material, dass durch das Schließelement während der Anordnung des Schließelements in der Öffnung zur Abdichtung der Abdichtung umgeformt wird. Das Dichtmaterial ordnet sich dabei insbesondere außerhalb der später erzeugten Schweißnaht an.

Insbesondere ist das Schließelement vor Schritt c) zumindest formschlüssig mit dem Gehäuse verbunden, ggf. zusätzlich kraftschlüssig.

Insbesondere beträgt der (Unter-)Druck in der Kammer weniger als 30 mbar [Millibar], bevorzugt weniger als 20 mbar.

Durch eine Niederdruckatmosphäre innerhalb der Kammer wird insbesondere eine geringere Energiedichte zur Erzeugung der Laserschweißnaht benötigt. Die besonderen Bedingungen der so erzeugten Atmosphäre führen zu einer Erhöhung der Strahlstabilität des Laserstrahls, Gase und Dämpfe beim Schweißen werden leichter aus dem geschmolzenen Material durch die Vakuumeinrichtung abgesaugt und die Funken und Spritzer werden reduziert.

Durch die geringere Energieeinwirkung auf das Gehäuse werden insbesondere auch die Möglichkeiten zur Erwärmung des Elektrolyten reduziert, sowie die Sicherheit bei Kontakt des Elektrolyten mit dem Laserstrahl erhöht.

Das Verfahren wird insbesondere in einer automatisierten Fertigungsanlage und durch ein Steuergerät, dass zur Durchführung des beschriebenen Verfahrens ausgestattet, konfiguriert oder programmiert ist, durchgeführt.

Es wird also eine Fertigungsanlage vorgeschlagen, die zumindest eine Handlingseinrichtung oder Handhabungseinrichtung für das Gehäuse bzw. die Batteriezelle, eine Laserschweißvorrichtung, eine Vakuumeinrichtung und eine daran angeschlossene Kammer sowie das Steuergerät aufweist.

Weiter kann das Verfahren auch von bzw. mit einem Computer bzw. mit einem Prozessor einer Steuereinheit ausgeführt werden. Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens durchführt. Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen. Die Ausführungen zu dem Verfahren sind insbesondere auf die Fertigungsanlage, das Steuergerät und/oder das computerimplementierte Verfahren (also den Computer bzw. den Prozessor, das System zur Datenverarbeitung, das computerlesbare Speichermedium) übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Batteriezelle in einer Explosionsdarstellung, in einer perspektivischen Ansicht;
- Fig. 2:: die Batteriezelle nach Fig. 1 gemäß Schritt a), in einer perspektivischen Ansicht;
- Fig. 3:: die Batteriezelle nach Fig. 1 und 2 gemäß Schritt b), in einer perspektivischen Ansicht;
- Fig. 4:: die Batteriezelle nach Fig. 3 mit einem alternativen Schließelement, in einer perspektivischen Ansicht;
- Fig. 5:: die Batteriezelle nach Fig. 1 bis 4 gemäß Schritt c), in einer perspektivischen Ansicht;
- Fig. 6:: die Batteriezelle nach Fig. 1 bis 5 gemäß Schritt d), in einer perspektivischen Ansicht;
- Fig. 7:: die Batteriezelle nach Fig. 1 bis 6 gemäß Schritt e), in einer perspektivischen Ansicht; und
- Fig. 8:: die Batteriezelle nach Fig. 1 bis 7 nach Schritt f), in einer perspektivischen Ansicht.

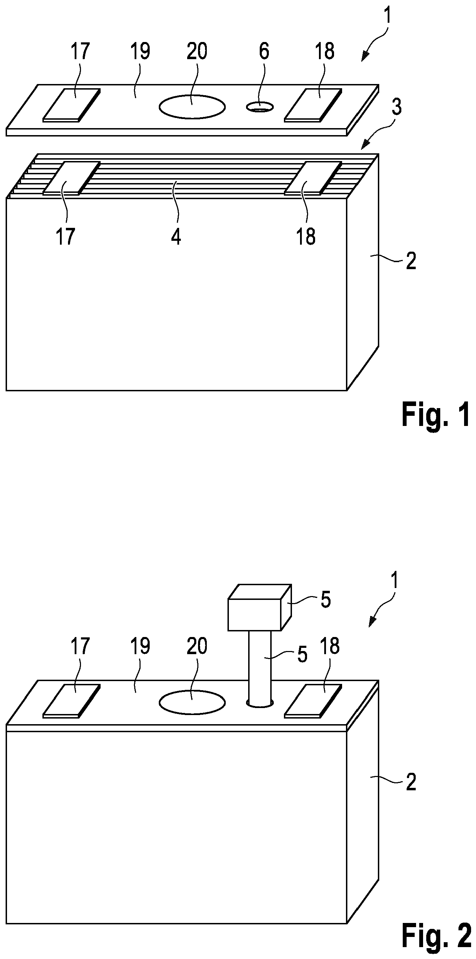

Fig. 1 zeigt eine Batteriezelle 1 in einer Explosionsdarstellung, in einer perspektivischen Ansicht. Fig. 2 zeigt die Batteriezelle 1 nach Fig. 1 gemäß Schritt a), in einer perspektivischen Ansicht. Die Fig. 1 und 2 werden im Folgenden gemeinsam beschrieben.

Die Batteriezelle 1 weist ein Gehäuse 2 mit einem ersten Volumen 3 und in dem ersten Volumen 3 eine Vielzahl von aufeinander gestapelten Elektroden 4 und einen Elektrolyten 5 auf. Der Elektrolyt 5 ist über eine Öffnung 6 in dem Gehäuse 2 in das erste Volumen 3 einführbar. Das Gehäuse 2 ist ein formfestes (also nur ein plastisch verformbares) Gehäuse 2. Die Elektroden 4 sind insbesondere in bekannter Weise gestapelt angeordnet und werden von einem Elektrolyten 5 bzw. einer Elektrolytflüssigkeit beaufschlagt.

Die Elektroden 4 sind folienartig ausgeführt, weisen also eine große Seitenfläche und eine geringe Dicke auf. Die Separatoren sind jeweils zwischen den Seitenflächen der benachbart angeordneten unterschiedlichen Elektrodenfolien angeordnet. Es sind jeweils die Anoden und die Kathoden innerhalb des Stapels von Elektroden 4 miteinander parallelgeschaltet, so dass die Ableiter einer Mehrzahl von Anoden miteinander elektrisch leitend verbunden sind und die Ableiter einer Mehrzahl von Kathoden miteinander elektrisch leitend verbunden sind. Die Ableiter der Anoden sind mit einem ersten Anschluss 17 und die Ableiter der Kathoden mit einem zweiten Anschluss 18 elektrisch leitend verbunden.

Das formfeste Gehäuse 2 weist einen Deckel 19 auf, an dem der erste Anschluss 17 und der zweite Anschluss 18 zur elektrischen Verbindung der innerhalb des Gehäuses 2 angeordneten Elektroden 4 mit einem außerhalb des Gehäuses 2 angeordneten Stromkreis, sowie die verschließbare Öffnung 6 zur Befüllung des ersten Volumens 3 mit dem Elektrolyten 5 vorgesehen ist. Weiter ist in dem Deckel 19 ein Überdruckventil 20 angeordnet, über den bei einer Druckerhöhung in dem ersten Volumen 3 eine Entspannung an eine Umgebung 13 erfolgen kann.

Gemäß Schritt a) erfolgt ein Bereitstellen der Batteriezelle 1 mit Gehäuse 2 und darin angeordneten Elektroden 4 und dem Elektrolyten 5 sowie der unverschlossenen Öffnung 6. Die Öffnung 6 ist in einem formstabilen Teil des Gehäuses 2, dem Deckel 19, angeordnet.

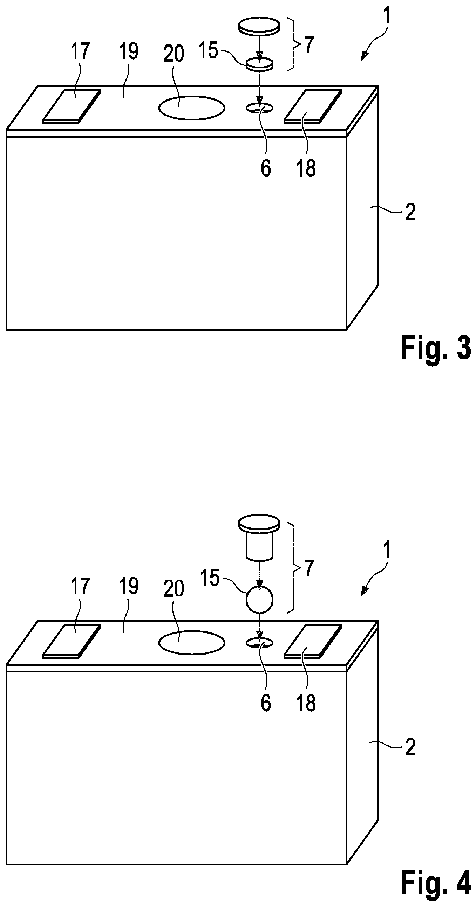

Fig. 3 zeigt die Batteriezelle 1 nach Fig. 1 und 2 gemäß Schritt b), in einer perspektivischen Ansicht. Fig. 4 zeigt die Batteriezelle 1 nach Fig. 3 mit einem alternativen Schließelement 7, in einer perspektivischen Ansicht. Die Fig. 3 und 4 werden im Folgenden gemeinsam beschrieben. Auf die Ausführungen zu den Fig. 1 und 2 wird verwiesen.

Gemäß Schritt b) erfolgt ein Entgasen des ersten Volumens 3 über die Öffnung 6 in bekannter Weise und ein Verschließen der Öffnung 6 mit einem Schließelement 7, wobei das Schließelement 7 und die Öffnung 6 eine nicht-stoffschlüssige, also eine kraftschlüssige und/oder formschlüssige, Verbindung ausbilden.

Das Schließelement 7 ist in beiden Fällen der Fig. 3 und 4 zweiteilig ausgeführt. Dabei kann z. B. das eine Element, z. B. ein Dichtmaterial 15, durch das andere Element des mehrteiligen Schließelements 7 so verformt werden, dass eine gute Abdichtung der Öffnung 6 erreicht werden kann. In Fig. 3 umfasst das Schließelement 7 zwei Scheiben. In Fig. 4 umfasst das Schließelement 7 einen Bolzen und eine durch den Bolzen umformbare Kugel.

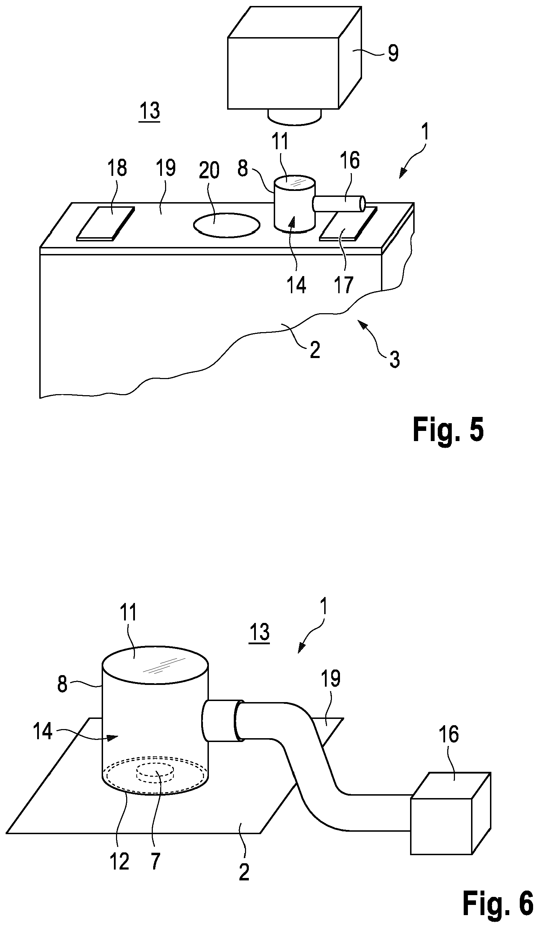

Fig. 5 zeigt die Batteriezelle 1 nach Fig. 1 bis 4 gemäß Schritt c), in einer perspektivischen Ansicht. Fig. 6 zeigt die Batteriezelle 1 nach Fig. 1 bis 5 gemäß Schritt d), in einer perspektivischen Ansicht. Die Fig. 5 und 6 werden im Folgenden gemeinsam beschrieben. Auf die Ausführungen zu Fig. 1 bis 4 wird verwiesen.

Gemäß Schritt c) erfolgt ein Anordnen einer Kammer 8 an dem Gehäuse 2, so dass die Öffnung 6 und das Schließelement 7 innerhalb der Kammer 8 (siehe auch Fig. 6) und zumindest ein Teil des Gehäuses 2 außerhalb der Kammer 8 angeordnet sind. Die Kammer 8 hat die Funktion das Schließelement 7 und einen Teil des Gehäuses 2 gegenüber einer Umgebung 13 der Batteriezelle 1 und der Kammer 8 abzudichten, so dass innerhalb der Kammer 8 eine spezielle Atmosphäre einstellbar ist, bevorzugt ein Vakuum oder Teilvakuum, dass über eine an die Kammer 8 angeschlossene Vakuumeinrichtung 16 realisierbar ist. Die Kammer 8 weist ein zweites Volumen 14 auf, dass deutlich geringer ist als das erste Volumen 3.

Die Kammer 8 weist eine offene Seitenfläche auf, die auf dem Gehäuse 2 angeordnet wird. Die Kammer 8 umgibt damit eine Fläche des Gehäuses 2, die die Öffnung 6 bzw. das Schließelement 7, eine Wärmeinflusszone der in Schritt e) erzeugten Schweißnaht 21 und eine, die Schweißnaht 21 und die Wärmeeinflusszone umgebende Zusatzzone umfasst. Die Zusatzzone verhindert, dass die Kammer 8 durch eine Kontaktierung der Wärmeeinflusszone beschädigt werden kann.

Die Fixierung zwischen der Kammer 8 und der Oberfläche des Gehäuses 2 erfolgt durch ein Ansaugsystem bzw. durch eine an die Kammer 8 angeschlossene Vakuumeinrichtung 16. Die Kammer 8 kontaktiert das Gehäuse 2 über eine Auflagefläche 12. Das Material dieser Auflagefläche 12 kann ein Gummi oder ein weiches Metall sein, um die Beschädigung des Gehäuses 2 durch das Anordnen der Kammer 2 aufgrund der Unterdruckbedingungen in der Kammer 8 zu vermeiden.

Schritt d) umfasst das Erzeugen eines Unterdrucks, also eines Teilvakuums oder eines Vakuums, in der Kammer 8. Dazu ist die Vakuumeinrichtung 16 an die Kammer 8 angeschlossen, über die Luft aus der Kammer 8 abgesaugt werden kann.

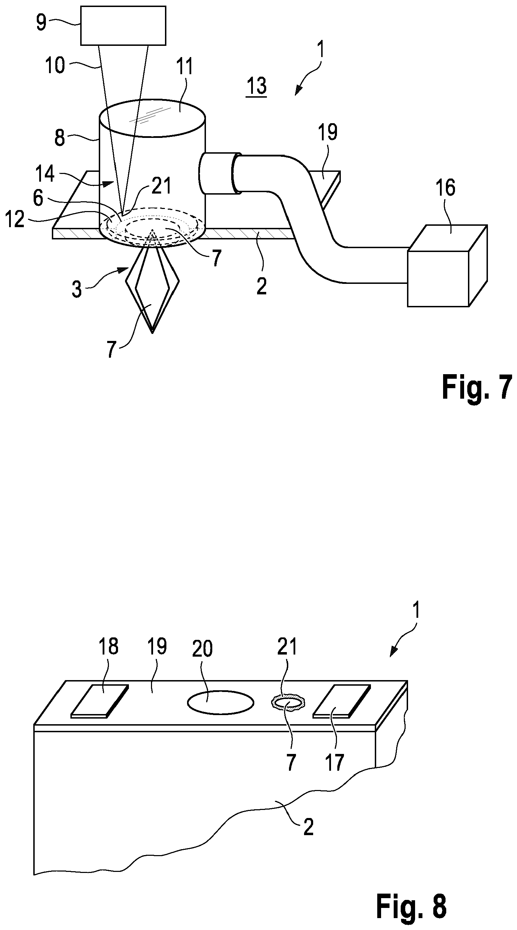

Fig. 7 zeigt die Batteriezelle 1 nach Fig. 1 bis 6 gemäß Schritt e), in einer perspektivischen Ansicht. Auf die Ausführungen zu den Fig. 1 bis 6 wird verwiesen.

Schritt e) umfasst das Bereitstellen einer Laserschweißvorrichtung 9 und das stoffschlüssiges Verbinden des Schließelements 7 mit dem Gehäuse 2 durch einen Laserstrahl 10, so dass die Öffnung 6 durch die so erzeugte stoffschlüssige Verbindung bzw. Schweißnaht 21 gasdicht verschlossen wird bzw. ist.

Der Laserstrahl 10 wird über eine lichtdurchlässige Wandung 11 der Kammer 8 in die Kammer 8 eingekoppelt. Die lichtdurchlässige Wandung 11 der Kammer 8 ist gegenüber von der offenen Seitenfläche der Kammer 8 und dem Gehäuse 2 angeordnet.

Die Kammer 8 ist während Schritt e) unbeweglich auf dem bzw. gegenüber dem Gehäuse 2 angeordnet. Das Gehäuse 2 wird mit der Kammer 8 gegenüber dem Laserstrahl 10 und der Umgebung 13 bewegt.

In Fig. 7 ist erkennbar, dass das Schließelement 7 als ein Niet ausgeführt ist, der unverformt in die Öffnung 6 eingeführt und dann zumindest innerhalb des ersten Volumens 3 verformt wird, so dass das Schließelement 7 unverlierbar in der Öffnung 6 angeordnet ist.

Fig. 8 zeigt die Batteriezelle 1 nach Fig. 1 bis 7 nach Schritt f), in einer perspektivischen Ansicht. Auf die Ausführungen zu den Fig. 1 bis 7 wird verwiesen.

Die Batteriezelle 1 ist nun betriebsbereit. Die Öffnung 6 ist durch das Schließelement 7 verschlossen und das Schließelement 7 über die Schweißnaht 21 mit dem Gehäuse stoffschlüssig verbunden.

### Bezugszeichenliste

- 1: Batteriezelle
- 2: Gehäuse
- 3: erstes Volumen
- 4: Elektrode
- 5: Elektrolyt
- 6: Öffnung
- 7: Schließelement
- 8: Kammer
- 9: Laserschweißvorrichtung
- 10: Laserstrahl
- 11: Wandung
- 12: Auflagefläche
- 13: Umgebung
- 14: zweites Volumen
- 15: Dichtmaterial
- 16: Vakuumeinrichtung
- 17: erster Anschluss
- 18: zweiter Anschluss
- 19: Deckel
- 20: Überdruckventil
- 21: Schweißnaht

## Patentansprüche

1. Verfahren zur Herstellung einer Batteriezelle (1), wobei die Batteriezelle (1) ein Gehäuse (2) mit einem ersten Volumen (3) und in dem ersten Volumen (3) eine Vielzahl von aufeinander gestapelten Elektroden (4) und einen Elektrolyten (5) aufweist; wobei der Elektrolyt (5) über eine Öffnung (6) in dem Gehäuse (2) in das erste Volumen (3) einführbar ist; wobei das Verfahren zumindest die folgenden Schritte umfasst:
a) Bereitstellen der Batteriezelle (1) mit Gehäuse (2) und darin angeordneten Elektroden (4) und dem Elektrolyten (5) sowie der unverschlossenen Öffnung (6);
b) Entgasen des ersten Volumens (3) über die Öffnung (6) und Verschließen der Öffnung (6) mit einem Schließelement (7), wobei das Schließelement (7) und die Öffnung (6) eine nicht-stoffschlüssige Verbindung ausbilden;
c) Anordnen einer Kammer (8) an dem Gehäuse (2), so dass die Öffnung (6) und das Schließelement (7) innerhalb der Kammer (8) und zumindest ein Teil des Gehäuses (2) außerhalb der Kammer (8) angeordnet sind;
d) Erzeugen eines Unterdrucks in der Kammer (8);
e) Bereitstellen einer Laserschweißvorrichtung (9) und stoffschlüssiges Verbinden des Schließelements (7) mit dem Gehäuse (2) durch einen Laserstrahl (10), so dass die Öffnung (6) durch die so erzeugte stoffschlüssige Verbindung gasdicht verschlossen ist.

2. Verfahren nach Patentanspruch 1, wobei der Laserstrahl (10) über eine lichtdurchlässige Wandung (11) der Kammer (8) in die Kammer (8) eingekoppelt wird.

3. Verfahren nach einem der vorhergehenden Patentansprüche, wobei die Kammer (8) eine Auflagefläche (12) zur Kontaktierung des Gehäuses (2) aufweist, wobei die Auflagefläche (12) zur gasdichten Abdichtung der Kammer (8) gegenüber einer Umgebung (13) geeignet ausgeführt ist.

4. Verfahren nach einem der vorhergehenden Patentansprüche, wobei die Kammer (8) ein zweites Volumen (14) aufweist, dass geringer ist als das erste Volumen (3).

5. Verfahren nach Patentanspruch 4, wobei das zweite Volumen (14) höchstens 5 Prozent des ersten Volumens (3) beträgt.

6. Verfahren nach einem der vorhergehenden Patentansprüche, wobei das Schließelement (7) ein Dichtmaterial (15) umfasst, durch das die Öffnung (6) vor Schritt c) zumindest flüssigkeitsdicht verschlossen ist.

7. Verfahren nach einem der vorhergehenden Patentansprüche, wobei das Schließelement (7) vor Schritt c) zumindest formschlüssig mit dem Gehäuse (2) verbunden ist.

8. Verfahren nach einem der vorhergehenden Patentansprüche, wobei der Unterdruck in der Kammer (8) weniger als 30 mbar beträgt.
